# EUROPÄISCHE PATENTANMELDUNG

(11) **EP 4 062 732 A1**
(43) Veröffentlichungstag der Anmeldung: **28.09.2022**
(21) Anmeldenummer: 22163816.6
(22) Anmeldetag: 23.03.2022
(51) Int. Cl.: A01C 1/00, A01C 7/12, B65G 53/46

(54) **STREUWERK UND STREUGERÄT**

(30) Priorität: 23.03.2021 DE 102021107225; 24.06.2021 DE 102021116375
(71) Anmelder: Streumaster Maschinenbau GmbH, 84546 Egglkofen (DE)
(72) Erfinder: Reinfurt, Karl, 84028 Landshut (DE); Schönberger, Josef, 84335 Mitterskirchen (DE); Billeriß, Helmut, 84568 Pleiskirchen (DE)
(74) Vertreter: Epping - Hermann - Fischer

(57) **Zusammenfassung**

Streuwerk (1), insbesondere für ein Streugerät der Bau-, Agrar- oder Umwelttechnik, mit mindestens einer Zellenradschleuse (3) mit einer Einlassöffnung (31) und einer Auslassöffnung (32) und einer dazwischen angeordneten Förderkammer (33). In der Förderkammer (33) sind mindestens zwei in Förderrichtung (36) gesehen nebeneinander angeordnete Zellenräder (34,35) angeordnet. Die Förderzellen (341,351) greifen zwischen den zwei Zellenrädern (34,35) ineinander. Die Zellenradschleuse (3) weist auf: einen ersten Förderpfad bei dem das Streugut (2) von den Förderzellen (341,351) an den Wänden (331,331) der Förderkammer (3) entlang von der Einlassöffnung (31) zur Auslassöffnung (32) transportiert wird, und/oder einen zweiten Förderpfad, bei dem das Streugut (2) von den ineinandergreifenden Förderzellen (341,351) von der Einlassöffnung (31) zur Auslassöffnung (32) transportiert wird. Des Weiteren wird ein Streugerät mit einem solchen Streuwerk angegeben.

## Beschreibung

Die Erfindung betrifft ein Streuwerk mit Zellenradschleuse insbesondere für ein Streugerät. Sie betrifft insbesondere ein Streuwerk für pulverförmiges oder granulatartiges Streugut. Sie betrifft weiterhin insbesondere Streuwerke für die Tiefbau- oder der Agrartechnik wie beispielsweise Bindemittelstreuer. Des Weiteren betrifft die Erfindung ein solches Streugerät.

Ein Streuwerk der eingangs genannten Art und ein Streugerät sind in der DE 103 12 811 A1 beschrieben. Um mit einem solchen Streuwerk die zum Teil geforderten großen Streumengen zu erzielen, sind Zellenräder mit großen Durchmessern erforderlich. Die für solche Zellenräder erforderliche Bauhöhe steht in vorhandenen Konstruktionsumgebungen nicht zur Verfügung.

Der Erfindung liegt insbesondere die Aufgabe zugrunde, ein Streuwerk der eingangs genannten Art bereitzustellen, das einerseits bei geringer Bauhöhe die Ausbringung von sehr großen Streumengen ermöglicht, mit dem aber andererseits auch vergleichsweise kleine Streumengen ausgebracht werden können. In beiden Fällen soll eine hohe Dosiergenauigkeit erzielt werden. Des Weiteren soll ein entsprechendes Streugerät bereitgestellt werden.

Diese Aufgabe wird durch ein Streuwerk und ein Streugerät mit den Merkmalen des Patentanspruches 1 bzw. des Patentanspruches 15 gelöst. Vorteilhafte Weiterbildungen des Streuwerks sind Gegenstand der auf Patentanspruch 1 rückbezogenen Patentansprüche. Der Offenbarungsgehalt der Patentansprüche wird hiermit ausdrücklich durch Rückbezug in die Beschreibung aufgenommen.

Das Streuwerk weist eine Einlassöffnung und eine Auslassöffnung und eine zwischen Einlassöffnung und Auslassöffnung angeordnete Förderkammer auf. Im bestimmungsgemäßen Betrieb gelangt Streugut von einem Streugutvorrat über dessen Streugutauslass in die Einlassöffnung der Zellenradschleuse. In der Förderkammer befinden sich mindestens zwei in einer Förderrichtung der Zellenradschleuse gesehen nebeneinander angeordnete Zellenräder mit jeweils einer Mehrzahl von radial um eine Drehachse der Zellenräder angeordneten Förderzellen. Mit Förderrichtung der Zellenradschleuse ist vorliegend die Richtung gemeint, in der das Streugut in der Förderkammer vorwiegend von der Einlassöffnung zur Auslassöffnung transportiert wird.

Bei einer Ausführungsform sind der Umfang und die Anzahl und Größe der Förderzellen der mindestens zwei Zellenräder beispielsweise identisch ausgestaltet. Als "identisch" gelten im vorliegenden Fall auch Zellenräder, die nominell exakt gleich sind, sich aber im Rahmen von Fertigungstoleranzen geringfügig und hinsichtlich technischer Gesichtspunkte nur unwesentlich unterscheiden.

Bei einer anderen Ausführungsform sind der Umfang und/oder die Anzahl und/oder Größe der Förderzellen der mindestens zwei Zellenräder beispielsweise unterschiedlich ausgestaltet.

Die zwei Zellenräder sind derart ausgestaltet und zueinander angeordnet, dass die Förderzellen der zwei Zellenräder zwischen den zwei Zellenrädern, insbesondere zwischen den beiden Drehachsen der zwei Zellenräder, zahnradartig ineinandergreifen. Beispielsweise haben die zwei Zellenräder in analoger Betrachtung zu Zahnrädern den gleichen Modul.

Die Zellenradschleuse ist insbesondere derart ausgestaltet und dazu eingerichtet, dass sie einen (ersten) Förderpfad aufweist, bei dem im bestimmungsgemäßen Betrieb des Streuwerks das Streugut von den Förderzellen an den Wänden der Förderkammer entlang von der Einlassöffnung zur Auslassöffnung transportiert wird.

Alternativ oder zusätzlich ist die Zellenradschleuse insbesondere derart ausgestaltet und dazu eingerichtet, dass sie einen (zweiten) Förderpfad aufweist, bei dem das Streugut im bestimmungsgemäßen Betrieb des Streuwerks von den ineinandergreifenden Förderzellen, sprich zwischen den Zellrädern hindurch, von der Einlassöffnung zur Auslassöffnung transportiert wird.

Die Zellenradschleuse ist bei einer Ausführungsform insbesondere derart ausgestaltet und dazu eingerichtet, dass sie
- einen ersten Förderpfad, beispielsweise für größere Streumengen, aufweist, bei dem das Streugut im bestimmungsgemäßen Betrieb des Streuwerks von den Förderzellen an den Wänden der Förderkammer entlang von der Einlassöffnung zur Auslassöffnung transportiert wird, und
- einen zweiten Förderpfad, beispielsweise für kleinere Streumengen, aufweist, bei dem das Streugut im bestimmungsgemäßen Betrieb des Streuwerks von den ineinandergreifenden Förderzellen, sprich zwischen den Zellrädern hindurch, von der Einlassöffnung zur Auslassöffnung transportiert wird. Ein Vorteil des zweiten Förderpfades gegenüber dem ersten Förderpfad besteht insbesondere darin, dass bei identisch eingestellter Streumenge über den zweiten Förderpfad eine höhere Gleichmäßigkeit des Streuteppichs erzielt werden kann, als dies über den ersten Förderpfad der Fall ist.

Bei einer Ausführungsform des Streuwerks oder einer seiner oben beschriebenen Ausführungsformen liegen die Drehachsen der zwei Zellenräder in einer Ebene und spannen die Drehachsen der zwei Zellenräder eine Ebene auf, welche schräg, insbesondere senkrecht zur Förderrichtung der Zellenradschleuse steht.

Als "senkrecht ... steht" gilt im vorliegenden Fall auch eine von den Drehachsen der zwei Zellenräder aufgespannte Ebene, die nominell senkrecht zur Förderrichtung liegt, jedoch im Rahmen von Fertigungstoleranzen dieser gegenüber geringfügig und in technischer Hinsicht unwesentlich verkippt ist.

Bei einer Ausführungsform des Streuwerks oder einer seiner oben beschriebenen Ausführungsformen greifen zwei benachbarte Zellenräder so weit ineinander, dass im bestimmungsgemäßen Betrieb des Streuwerks jede Trennwand einer Förderzelle des einen Zellenrades bei deren Durchlauf zwischen den zwei Zellenrädern in eine Förderzelle des benachbarten anderen Zellenrades eingreift und deren Innenfläche berührt, auf diese stößt oder drückt.

Bei einer Ausführungsform des Streuwerks oder einer seiner oben beschriebenen Ausführungsformen berührt oder stößt dabei die Trennwand des einen Zellenrades beim Durchlauf durch die von den zwei Drehachsen aufgespannte Ebene, mit ihrem äußersten Ende exakt (auf) die Innenfläche der Förderzelle des anderen Zellenrades, beispielsweise an einer achsnächsten Stelle der Innenfläche der Förderzelle.

Beispielsweise ist der Abstand zwischen den Drehachsen der zwei Zellenräder so eingerichtet und wirken die zwei Zellenräder so zusammen, dass sich die Trennwände beim Durchlauf zwischen den zwei Zellenrädern aufgrund gegenseitiger Berührung der zwei Zellenräder verformen. Der Abstand zwischen den Drehachsen der zwei Zellenräder ist dazu beispielsweise geringfügig geringer als die Summe aus dem äußeren Radius der Zellenräder, sprich dem Radius, auf dem die äußersten Enden der Trennwände der Förderzellen liegen, und dem inneren Radius der Zellenräder, sprich dem Radius, auf dem die achsnächsten Punkte der Böden der Förderzellen liegen.

Bei einer Ausführungsform des Streuwerks oder einer seiner oben beschriebenen Ausführungsformen sind die zwei Zellenräder identisch oder unterschiedlich groß ausgestaltet und mechanisch derart miteinander gekoppelt, dass sie sich bei bestimmungsgemäßem Betrieb des Streuwerks in gegenläufigen Drehrichtungen synchron zueinander abwälzen.

Bei einer anderen Ausführungsform des Streuwerks oder einer seiner oben beschriebenen Ausführungsformen sind die zwei Zellenräder identisch ausgestaltet und mechanisch derart miteinander gekoppelt, dass sie sich bei bestimmungsgemäßem Betrieb des Streuwerks in gegenläufigen Drehrichtungen synchron zueinander drehen.

Zur Herstellung eines Synchronlaufs der zwei Zellenräder, egal ob identisch oder unterschiedlich groß, ist beispielsweise an jedem der zwei Zellenräder ein Zahnrad vorgesehen, das fest mit dem zugeordneten Zellenrad verbunden ist. Die zwei Zahnräder haben den gleichen Modul und greifen ineinander. Die Größen der Zahnräder sind so gewählt, dass die Zellen der Zellenräder wie oben beschrieben ineinander greifen.

Als "identisch" gelten im vorliegenden Zusammenhang auch Zahnräder, die nominell exakt gleich sind, sich aber im Rahmen von Fertigungstoleranzen geringfügig und in technischer Hinsicht unwesentlich unterscheiden. Alternativ kann der Synchronlauf beispielsweise mittels einer Kette, mittels eines Riemens, mittels eines Zahnriemens, mittels einer Reibungskupplung, mittels eines Getriebes, mittels aufeinander abgestimmter getrennter Antriebe, beispielsweise getrennter hydraulischer Antriebe oder mittels eines anderweitigen Antriebs (wie beispielsweise ein oder mehrere Schrittmotor/en) realisiert sein.

Die Zellenräder werden im bestimmungsgemäßen Betrieb des Streuwerks beispielsweise vermittels mechanischer Kopplung an den Antrieb eines Streugeräts, mittels eines separaten hydraulischen Antriebs oder mittels eines separaten elektrischen Antriebs in Drehbewegung versetzt.

Bei einer Ausführungsform des Streuwerks oder einer seiner oben beschriebenen Ausführungsformen sind die zwei Zellenräder derart zueinander angeordnet, dass sich im bestimmungsgemäßen Betrieb des Streuwerks eine Trennwand einer Förderzelle des einen Zellenrades bei deren Durchlauf zwischen den zwei Zellenrädern an die Innenfläche der jeweils zugeordneten benachbarten Förderzelle des anderen Zellenrades anlegt oder andrückt, in die die eine Trennwand eingreift. Insbesondere ist der Abstand zwischen den Drehachsen der zwei Zellenräder so eingerichtet, dass jede Trennwand bei deren Durchlauf zwischen den zwei Zellenrädern derart auf die Innenfläche der zugeordneten Förderzelle des anderen Zellenrades drückt, dass sich die Trennwand und/oder die Innenfläche der zugeordneten Förderzelle verformt.

Insbesondere legen oder drücken sich die Trennwände jeweils mit ihrem äußeren Endbereich an die Innenfläche der jeweils zugeordneten benachbarten Förderzelle des anderen Zellenrades an.

Bei einer Ausführungsform des Streuwerks oder einer seiner oben beschriebenen Ausführungsformen ist der Abstand zwischen den Drehachsen der zwei Zellenräder geringer ist als die Summe aus dem äußeren Radius des einen Zellenrades und dem inneren Radius des anderen Zellenrades.

Bei einer Ausführungsform des Streuwerks oder einer seiner oben beschriebenen Ausführungsformen sind die Förderzellen vollständig aus einem elastischen Material, insbesondere aus einem gummiartigen Material, Kunststoff-Material oder Kunststoff-Compound-Material, ausgebildet. Dadurch ist es möglich, eine Selbstreinigung der Zellen von Streugut aufgrund Verformung der Trennwände und/oder der Böden der Förderzellen an den Wänden der Förderkammer und/oder beim Ineinandergreifen der Förderzellen zwischen den Zellenrädern hervorzurufen. Eine solche Selbstreinigung ist insbesondere bei Bindemittelverteilgeräten, die zur Bodenstabilisierung in der Bauindustrie eingesetzt werden, wichtig. Dies hat zum Ziel, dass nicht aufgrund von Anlagerungen von Streugut an den Zellwänden zu wenig Bindemittel in den Boden gelangt und damit die erwartete Stabilität des Bodens verfehlt wird.

Verschiedene Mittel zur Verformung von Förderzellen während deren Umlauf in einer Förderkammer sind in der oben bereits genannten DE 103 12 881 A1 beschrieben, deren Offenbarungsgehalt insofern hiermit durch Rückbezug aufgenommen wird.

Bei einer vorteilhaften Ausführungsform des Streuwerks oder einer seiner oben beschriebenen Ausführungsformen sind die Förderzellen mindestens eines der zwei Zellenräder radial gesehen beispielsweise in einem Stück (einstückig) aus elastischem Material, insbesondere aus einem elastischen Kunststoffmaterial gefertigt. Ein solches Zellenrad ist beispielsweise vorgefertigt auf einer Antriebswelle aufgesteckt oder wird beispielsweise auf einer Antriebswelle gefertigt, beispielsweise mittels Spritzguss oder Spritzpressen. Die Antriebswelle ist beispielsweise mit einem Metall, beispielsweise Stahl, oder mit einem anderen mechanisch stabilen Material gefertigt. Es kann eine Mehrzahl von jeweils einstückig ausgebildeten insbesondere gleichartigen Zellenrädern seriell auf einer gemeinsamen Antriebswelle ausgebildet sein, um gewünschte Breiten von Zellenradschleusen zu erzielen.

Die Förderzellen sind beispielsweise mit einem Kunststoff wie zum Beispiel PU, PP oder PS oder aus einer Kombination dieser Materialien gefertigt. Sie können aber auch aus anderen für das jeweils zu dosierende Material geeigneten flexiblen Materialien gefertigt sein. Denkbar sind aber auch Förderzellen, welche mit Stahl, Aluminium und/oder Bronze gefertigt sind.

Bei einer Ausführungsform des Streuwerks oder einer seiner oben beschriebenen Ausführungsformen sind die Förderzellen aus einem Material gefertigt sein, auf dem das Streugut schlecht oder idealerweise überhaupt nicht haftet. Dazu sind die oben genannten Materialien beispielsweise mit geeigneten Additiven versehen sein. Ein in vielen Fällen geeignetes Antihaft-Material ist beispielsweise Teflon.

Ein Streugerät umfasst einen Streugutbehälter mit einem Streugutauslass. Dem Streugutauslass nachfolgend ist ein oben beschriebenes Streuwerk oder ein Streuwerk gemäß einer der oben beschriebenen Ausführungsformen angeordnet.

Bei einer Ausführungsform des Streugeräts weist das Streuwerk eine Mehrzahl von in Fahrrichtung des Streugeräts gesehen nebeneinander angeordneten Zellenradschleusen auf. Die Zellenradschleusen können beispielsweise unabhängig voneinander betrieben werden, so dass unterschiedliche Streubreiten einstellbar sind.

Bei einer anderen Ausführungsform des Streugeräts sind im Unterschied zur vorgenannten Ausführungsform die Zellenradschleusen oder einige davon in Fahrtrichtung des Streugeräts axial versetzt zueinander angeordnet und überlappen zueinander benachbarte Zellenradschleusen in Fahrrichtung gesehen teilweise oder vollständig, sprich sind im letzteren Fall komplett hintereinander "geschaltet". Damit können die flächenbezogenen Mengen des gestreuten Materials zusätzlich (zur Drehzahländerung der Zellenradschleuse(n)) durch Zu- und Abschalten einzelner Zellenradschleusen variiert werden können. Alternativ können bei dieser Ausführungsform oder bei einer Ausführungsform, bei der mehrere Zellenradschleusen nicht axial versetzt zueinander angeordnet sind, bei Bedarf die benachbarten Zellenradschleusen auch nicht überlappen und beispielsweise einen Abstand zueinander aufweisen.

Weitere Vorteile und vorteilhafte Ausgestaltungen und Weiterbildungen des Streuwerks und dessen oben beschriebenen Ausführungsformen und des Streugeräts ergeben sich aus den im Folgenden im Zusammenhang mit schematischen Zeichnungen dargestellten Ausführungsbeispielen. Gleiche, gleichartige und gleich wirkende Elemente sind in den Figuren mit den gleichen Bezugszeichen versehen. Die Figuren und die Größenverhältnisse der in den Figuren dargestellten Elemente untereinander sind nicht grundsätzlich als maßstäblich zu betrachten. Vielmehr können einzelne Elemente zur besseren Darstellbarkeit und/oder für ein besseres Verständnis in Relation übertrieben groß dargestellt sein. Es zeigen:
Figur 1 eine schematische Darstellung eines Schnittes durch ein Ausführungsbeispiels des Streuwerks im Betriebsmodus für eine große Streumenge,
Figur 2 eine schematische Darstellung eines Schnittes durch ein Ausführungsbeispiels des Streuwerks im Betriebsmodus für eine kleine Streumenge,
Figur 3 eine schematische Darstellung einer perspektivischen Ansicht einer Zellenradschleuse gemäß Ausführungsbeispiel mit Synchronlaufmechanik,
Figur 4 eine schematische Darstellung eines Schnittes durch Förderzellen eines weiteren Ausführungsbeispiels des Streuwerks, und
Figur 5 eine schematische Seitenansicht eines Streugeräts mit einem Streuwerk gemäß Ausführungsbeispiel.

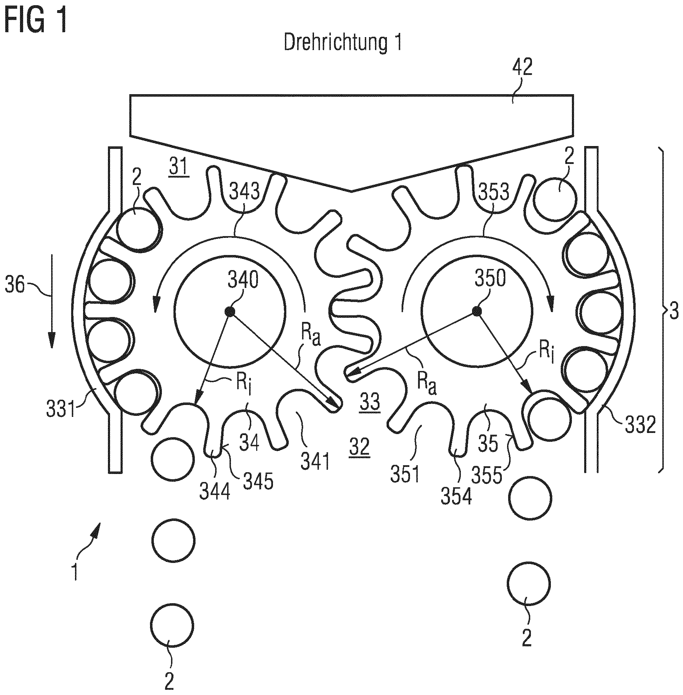

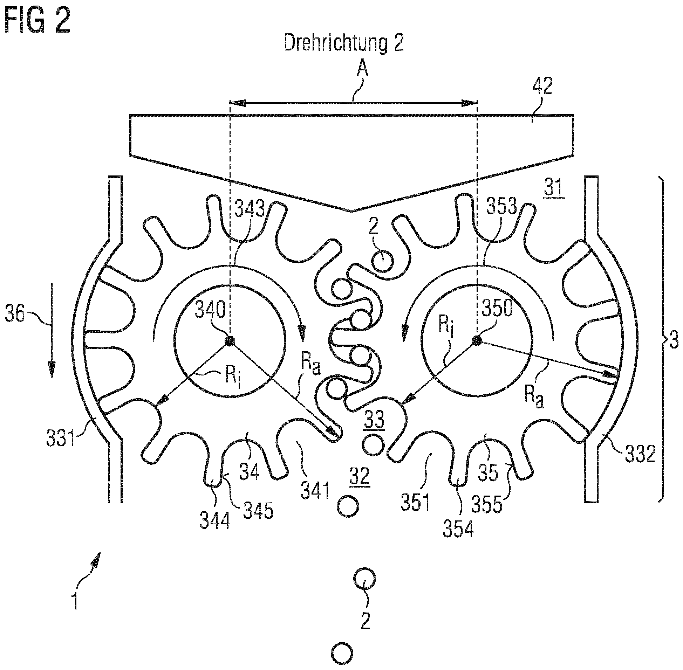

Die Figuren 1 und 2 zeigen jeweils einen Schnitt durch ein Ausführungsbeispiel des Streuwerks 1, der senkrecht zu den zwei Drehachsen 340,350 von zwei Zellenrädern 34,35 durch die zwei Zellenräder 34,35 verläuft.

Das Streuwerk 1 weist eine Zellenradschleuse 3 mit einer Förderkammer 33 auf, in der sich die zwei Zellenräder 34,35 befinden. Die Förderkammer 33 weist eine oberhalb der Zellenräder 34,35 liegende Einlassöffnung 31 für Streugut und eine unterhalb der Zellenräder 34,35 liegende Auslassöffnung 32 auf.

Die zwei Zellenräder 34,35 sind in der Förderkammer 33 in Förderrichtung 36 der Zellenradschleuse 3 gesehen nebeneinander angeordnet. Die zwei Zellenräder 34,35 sind in diesem Beispiel hinsichtlich ihres Umfangs und ihrer Anzahl und Größe ihrer Förderzellen 341,351 identisch ausgestaltet.

Die zwei Drehachsen 340,350 der zwei Zellenräder 34,35 spannen eine Ebene auf, welche senkrecht zur Förderrichtung 36 der Zellenradschleuse 3 steht. Bei einem anderen Ausführungsbeispiel (nicht gezeigt) steht die Ebene nicht senkrecht zur Förderrichtung 36, sondern anderweitig geeignet schräg zur Förderrichtung 36.

Die Drehachsen 340,350 der zwei Zellenräder 34,35 verlaufen parallel zueinander und weisen einen derartigen Abstand voneinander auf, dass im bestimmungsgemäßen Betrieb des Streuwerks 1 die Förderzellen 341,351 zwischen den zwei Zellenrädern 34,35 zahnradartig ineinander greifen und zwischen Einlassöffnung 31 und Auslassöffnung 32 zumindest soweit abdichten, dass im Betrieb oder bei Stillstand der Zellenradschleuse 3 keine bedeutende Menge oder überhaupt kein Streugut unbeabsichtigt durch die Zellenradschleuse 3 fließt. Insbesondere weisen die beiden Zellenräder 34,35 mit ihren Förderzellen 341,351 in analoger Betrachtung zu Zahnrädern den gleichen Modul auf.

Die Zellenradschleuse 3 ist derart ausgebildet und konstruiert, dass die zwei Zellenräder 34,35 sowohl in ersten gegenläufigen Drehrichtungen 343,353, bei der sich die Förderzellen 341,351 an den Förderkammerwänden 331,332 von der Einlassöffnung 31 zur Auslassöffnung 32 bewegen, als auch in zweiten gegenläufigen Drehrichtungen 343,353, bei der sich die Förderzellen 341,351 zwischen den zwei Drehachsen 340,350 von der Einlassöffnung 31 zur Auslassöffnung 32 bewegen, betrieben werden können.

Diese Ausgestaltung der Zellenradschleuse 3 ermöglicht somit zwei Förderpfade für Streugut 2 von der Einlassöffnung 31 zur Auslassöffnung 32:
- Einen Förderpfad, bei dem das Streugut 2 von den Förderzellen 341,351 an den Wänden 331,332 der Förderkammer 3 entlang von der Einlassöffnung 31 zur Auslassöffnung 32 transportiert wird. Dieser Förderpfad ist in Figur 1 veranschaulicht.
- Einen Förderpfad, bei dem das Streugut 2 von den zwischen den zwei Zellenrädern 34,35 ineinandergreifenden Förderzellen 341,351 zwischen den zwei Zellenrädern 341,351 hindurch von der Einlassöffnung 31 zur Auslassöffnung 32 transportiert wird.

Bei dem Streuwerk 1 sind beispielsweise zumindest die Innenwände der Förderzellen 341,351 vollständig mit einem elastischen Material gebildet.

Des Weiteren sind die zwei Zellenräder 34,35 hier derart zueinander angeordnet, dass im bestimmungsgemäßen Betrieb des Streuwerks 1 sich jeweils das äußerste Ende einer Trennwand 354 einer Förderzelle 351 des einen Zellenrades 35 bei deren Durchlauf zwischen den zwei Zellenrädern 34,35 an die Innenfläche der jeweils benachbarten Förderzelle 341 des anderen Zellenrades 34 anlegt oder andrückt, in die die Trennwand 354 eingreift. Der Abstand A zwischen den beiden Drehachsen 340,350 der zwei Zellenräder 34,35 und die Position der ineinandergreifenden Förderzellen 341,351 zueinander ist insbesondere so eingestellt und aufeinander abgestimmt, dass sich jede Trennwand 344,354 bei ihrem Durchlauf zwischen den zwei Zellenrädern 34,35 in der Förderzelle 341,351, in die sie eingreift und an deren Innenfläche sie sich anlegt oder andrückt, verbiegt oder anderweitig verformt wird, beispielsweise gestaucht wird. Zusätzlich oder alternativ kann dabei die Innenfläche der jeweiligen Förderzelle 341,351, auf die die zugeordnete Trennwand 354 drückt, verformt werden. Beispielsweise ist dazu der Abstand zwischen den Drehachsen 340,350 der zwei Zellenräder 34,35 voneinander geringfügig geringer als die Summe aus dem äußeren Radius Rₐ des einen Zellenrades 34 bzw. 35 und dem inneren Radius Rᵢ des anderen Zellenrades 35 bzw. 34. Insbesondere drückt dabei die Stirnseite der einen Trennwand 354 mit ihrer Stirnseite auf einen achsnächsten Bereich der Innenfläche der Förderzelle 341, in die sie eingreift. Beispielsweise ist dazu dieser Abstand A zwischen 0,5 mm und 5 mm, insbesondere zwischen 1 mm und 3 mm geringer als Rₐ + Rᵢ. Dies ist beispielsweise auch für den Fall anwendbar, dass die zwei Zellenräder unterschiedlich groß sind (nicht gezeigt).

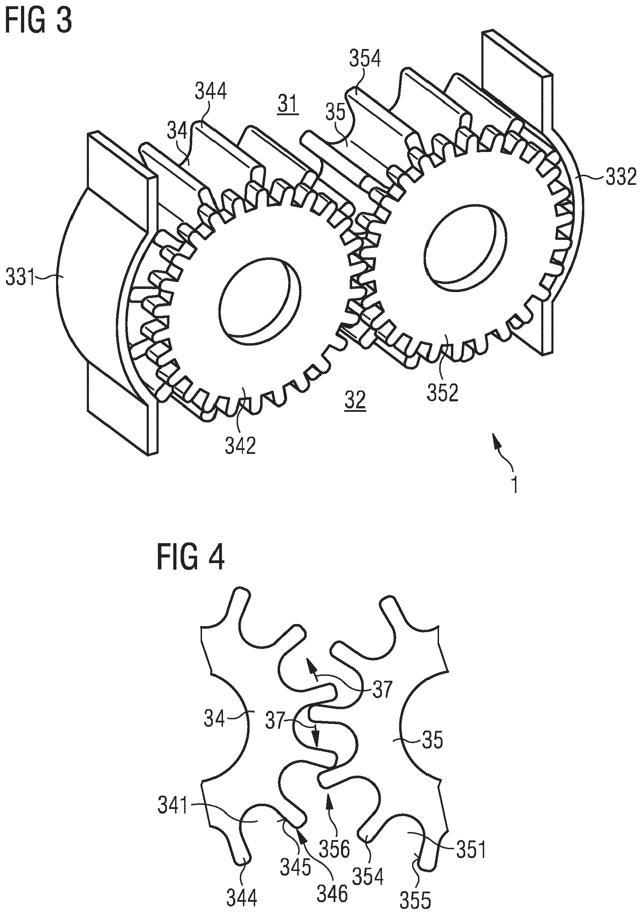

Bei einem anderen Ausführungsbeispiel (vgl. Figur 4) drücken die Trennwände 344,354, insbesondere jeweils deren radial äußerer Endbereich 346,356, des einen Zellenrades 34,35 bei deren jeweiligem Durchlauf durch die jeweils zugeordnete Förderzelle 351,341 des anderen Zellenrades 35,34 nicht jeweils auf deren achsnächsten Bereich, sondern berühren, insbesondere drücken auf die Innenfläche 355,345 der jeweils zugeordneten Förderzelle 351,341 des anderen Zellenrades 34,35 an anderer Stelle. Beispielsweise ist bei diesem Ausführungsbeispiel der Abstand A und Durchlauf der Förderzellen 341,351 zwischen den Drehachsen der zwei Zellenräder 34,35 beziehungsweise das Ineinandergreifen der Förderzellen 341,351 derart aufeinander abgestimmt, dass sich die Trennwände 354,344 des einen Zellenrades 35,34 bei deren jeweiligem Durchlauf durch die jeweils zugeordnete Förderzelle 341,351 des anderen Zellenrades 34,35 beim Andrücken an die jeweilige Innenfläche der jeweils zugeordneten Förderzelle 341,351 des anderen Zellenrades 34,35 verbiegen (siehe Pfeile 37, die gegebenenfalls die Biegerichtung anzeigen), um beispielsweise eine hinreichende Abdichtwirkung zwischen der Einlassöffnung 31 und der Auslassöffnung 32 zu bewirken. Beispielsweise ist der Abstand A zwischen den Drehachsen 340,350 der zwei Zellenräder 34,35 dabei größer als Ra + Ri, aber jedenfalls kleiner als die Summe aus Ra des einen Zellenrades 34 und Ra des anderen Zellenrades 35. Beispielsweise ist der Abstand A zwischen den beiden Drehachsen 340,350 der zwei Zellenräder 34,35 zwischen 25 mm und 35 mm größer als Ra + Ri, insbesondere ca. 30 mm größer als Ra + Ri.

Das Streuwerk kann bei allen oben beschriebenen Ausführungsformen und Ausführungsbeispielen so ausgestaltet sein, dass der Abstand A zwischen den beiden Drehachsen variabel einstellbar, sprich verstellbar ist, um beispielsweise einen Verschleiß an den Trennwänden auszugleichen.

Bei allen oben beschriebenen Ausführungsformen und Ausführungsbeispielen sind die Förderzellen eines Zellenrades radial betrachtet beispielsweise in einem Stück (einstückig), sprich als einstückiger Förderzellenring aus einem Kunststoff wie zum Beispiel Polyurethan (PU oder PUR), Polypropylen (PP) oder Polystyrol (PS) oder aus einer Kombination dieser Materialien gefertigt. Die Förderzellen können auch aus einem anderen geeigneten Gummi-, Kunststoff- oder Kunststoff-Compound-Material, gefertigt sein. Die Förderzellen können alternativ beispielsweise mehrstückig, sprich als aus mehreren Stücken zusammengesetzter Förderzellenring ausgestaltet sein.

Ein solches Zellenrad ist beispielsweise vorgefertigt und auf einer Antriebswelle (hier nicht gezeigt) aufgesteckt oder wird beispielsweise auf einer Antriebswelle gefertigt, beispielsweise mittels Spritzguss oder Spritzpressen. Die Antriebswelle ist beispielsweise mit einem Metall, beispielsweise Stahl, oder mit einem anderen mechanisch stabilen Material gefertigt. Auf der Antriebswelle können dann beispielsweise mehrere einstückige Zellenräder seriell aufgesteckt bzw. aufgebracht sein.

Alternativ sind, je nach technischer Anforderung, die Förderzellen beispielsweise mit Stahl, Aluminium und/oder Bronze gefertigt. Daneben sind abhängig von technischen Spezifikationen die bereits weiter oben für die Förderzellen 341,351 genannten elastischen Materialien verwendbar.

Bei dem Ausführungsbeispiel von Figur 3 ist an benachbarten seitlichen Enden der zwei Zellenräder 34,35 jeweils ein Zahnrad 342,352 koaxial befestigt und dort mit dem zugeordneten Zellenrad 34,35 fest verbunden. Die zwei Zahnräder 342,352 sind so dimensioniert, dass sie ineinander greifen und zusammenwirken, sodass sichergestellt ist, dass sich die zwei Zellenräder 34,35 im bestimmungsgemäßen Betrieb des Streuwerks 1 in entgegengesetzten Drehrichtungen 343,353 zueinander synchron drehen. Die zwei Zahnräder 342,352 sind beispielsweise identisch.

Bei einem anderen Ausführungsbeispiel (nicht gezeigt) sind die zwei Zellenräder 34,35 unterschiedlich groß und wälzen synchron zueinander ab, indem sie beispielsweise in analoger Betrachtung zu Zahnrädern den gleichen Modul besitzen.

Alternativ (in den Figuren nicht gezeigt) kann, wie weiter oben bereits erwähnt, ein solcher Synchronlauf beispielsweise mittels einer Kette, mittels eines Riemens, mittels eines Zahnriemens oder mittels einer Reibungskupplung oder mittels eines Getriebes, mittels aufeinander abgestimmter getrennter Antriebe, beispielsweise getrennter hydraulischer Antriebe oder mittels eines anderweitigen Antriebs (wie beispielsweise ein oder mehrere Schrittmotor/en) realisiert sein.

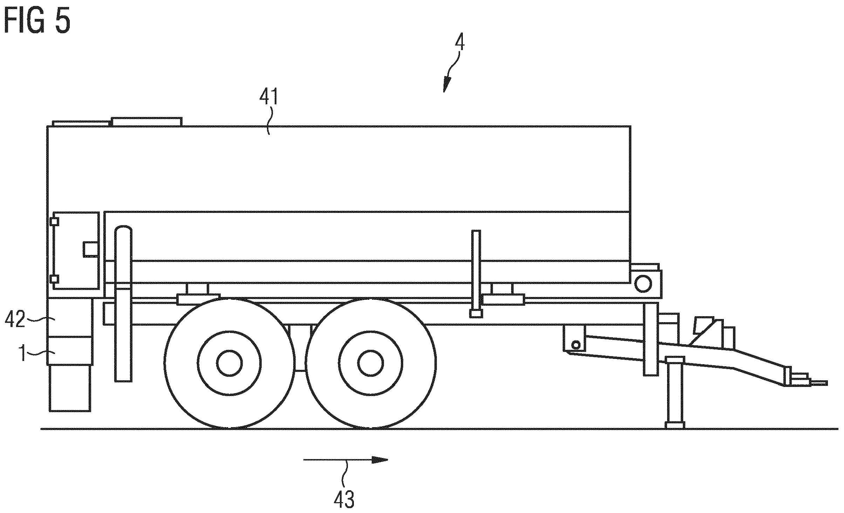

Das in Figur 5 in Seitenansicht dargestellte Streugerät 4 umfasst einen Streugutbehälter 41 mit einem Streugutauslass 42. Dem Streugutauslass 42 nachfolgend ist ein Streuwerk 1 gemäß Ausführungsbeispiel angeordnet. Der Streugutauslass 42 befindet sich über der Einlassöffnung 31 der Zellenradschleuse 3. Im bestimmungsgemäßen Betrieb des Streugeräts 4 gelangt Streugut 2 vom Streugutbehälter 41 über den Streugutauslass 42 und die Einlassöffnung 31 in die Zellenradschleuse 3. Dort wird das Streugut 2 über einen der oben beschriebenen Förderpfade (siehe Figuren 1 und 2) durch die Zellenradschleuse 3 transportiert. Nachfolgend fällt das Streugut 2 in der gewünschten Dosierung durch die Auslassöffnung 32 unmittelbar oder mittelbar, beispielsweise über eine Art Rutsche, auf den zu behandelnden Untergrund oder in den Einlass einer weiteren Anlagenkomponente. Letztere ist beispielsweise eine Überladeeinrichtung, die das Streugut in einen weiteren Maschinenbestandteil, wie beispielsweise eine Fräse, transportiert.

Das Streugerät 4 weist ein Streuwerk 1 mit einer Mehrzahl von in Fahrrichtung 43 des Streugeräts 4 axial in einer Linie nebeneinander angeordneten Zellenradschleusen 3 auf. Die Zellenradschleusen 3 können unabhängig voneinander betrieben werden, so dass unterschiedliche Streubreiten wählbar sind.

Bei einem weiteren Ausführungsbeispiel eines Streugeräts sind im Unterschied zu dem Ausführungsbeispiel von Figur 5 die Zellenradschleusen in Fahrtrichtung des Streugeräts nicht axial in einer Linie nebeneinander, sondern axial versetzt zueinander angeordnet. Bei einer Weiterbildung dieses Ausführungsbeispiel überlappen zueinander benachbarte Zellenradschleusen in Fahrrichtung gesehen teilweise oder vollständig und lassen sich einzelne Zellenradschleusen getrennt voneinander zu- und abschalten.

Die Zellenräder 34,35 werden im bestimmungsgemäßen Betrieb des Streugeräts 4 beispielsweise vermittels mechanischer Kopplung an den Antrieb des Streugeräts 4, mittels eines separaten hydraulischen Antriebs oder mittels eines separaten elektrischen Antriebs in die gewünschte Drehbewegung versetzt.

Die vorliegende Erfindung ist nicht durch die Beschreibung anhand der Ausführungsbeispiele auf darin enthaltenen konkreten Merkmalskombinationen beschränkt. Vielmehr umfasst die Erfindung jede Ausgestaltung einer Zellenradschleuse alleine, der die oben dargelegte prinzipielle Idee der Erfindung zugrunde liegt, und jede Ausgestaltung eines Streuwerks bzw. eines Streugeräts mit einer solchen Zellenradschleuse. Insbesondere umfasst die Erfindung jedes einzelne der oben beschriebenen Merkmale und jede Kombination der oben beschriebenen einzelnen Merkmale, was insbesondere jede Kombination von Merkmalen aus den Patentansprüchen betrifft, auch wenn diese Kombination selbst in der allgemeinen Beschreibung der Erfindung, in den Patentansprüchen oder in den Ausführungsbeispielen nicht ausdrücklich beschrieben ist.

### Bezugszeichenliste

- 1: Streuwerk
- 2: Streugut
- 3: Zellenradschleuse
- 31: Einlassöffnung
- 32: Auslassöffnung
- 33: Förderkammer
- 331: Wand der Förderkammer
- 332: Wand der Förderkammer
- 34: Zellenrad
- 340: Drehachse des Zellenrades 34
- 341: Förderzelle des Zellenrads 34
- 342: Zahnrad
- 343: Drehrichtung des Zellenrads 34
- 344: Trennwand des Zellenrads 34
- 345: Innenfläche einer Förderzelle 341
- 346: Endbereich einer Trennwand 344
- 35: Zellenrad
- 350: Drehachse des Zellerades 35
- 351: Förderzelle des Zellenrads 35
- 352: Zahnrad
- 353: Drehrichtung des Zellenrads 35
- 354: Trennwand des Zellenrads 35
- 355: Innenfläche einer Förderzelle 351
- 356: Endbereich einer Trennwand 354
- 36: Förderrichtung
- 37: Biegerichtung
- 4: Streugerät
- 41: Streugutbehälter
- 42: Streugutauslass
- 43: Fahrtrichtung des Streugeräts
- A: Abstand zwischen den Drehachsen 340,350
- Rₐ: äußerer Radius des Zellenrades
- Rᵢ: innerer Radius des Zellenrades

## Patentansprüche

1. Streuwerk (1), insbesondere für ein Streugerät der Bau-, Agrar- oder Umwelttechnik, mit
- mindestens einer Zellenradschleuse (3) mit einer Einlassöffnung (31) und einer Auslassöffnung (32) und einer dazwischen angeordneten Förderkammer (33), wobei
- in der Förderkammer (33) mindestens zwei in Förderrichtung (36) gesehen nebeneinander angeordnete Zellenräder (34,35) angeordnet sind,
- die Förderzellen (341,351) zwischen den zwei Zellenrädern (34,35) ineinandergreifen und
- die Zellenradschleuse (3):
- einen ersten Förderpfad aufweist, bei dem das Streugut (2) von den Förderzellen (341,351) an den Wänden (331,331) der Förderkammer (3) entlang von der Einlassöffnung (31) zur Auslassöffnung (32) transportiert wird, und/oder
- einen zweiten Förderpfad aufweist, bei dem das Streugut (2) von den ineinandergreifenden Förderzellen (341,351) von der Einlassöffnung (31) zur Auslassöffnung (32) transportiert wird.

2. Streuwerk (1) nach Anspruch 1, bei dem Drehachsen (340,350) der zwei Zellenräder (34,35) eine Ebene aufspannen, welche schräg zu einer Förderrichtung (36) der Zellenradschleuse (3) steht.

3. Streuwerk (1) nach Anspruch 2, bei dem die Ebene senkrecht zu der Förderrichtung (36) steht.

4. Streuwerk (1) nach einem der Ansprüche 1 bis 3, bei dem die zwei Zellenräder (34,35) mechanisch derart miteinander gekoppelt sind, dass sie sich bei bestimmungsgemäßem Betrieb des Streuwerks (1) in gegenläufigen Drehrichtungen (343,353) synchron zueinander abwälzen.

5. Streuwerk (1) nach Anspruch 4, bei dem die zwei Zellenräder (34,35) identisch zueinander sind und sich synchron zueinander drehen.

6. Streuwerk (1) nach Anspruch 4 oder 5, bei dem mit jedem der zwei Zellenräder (34,35) ein Zahnrad (342,352) gekoppelt ist, die so zusammenwirken, sodass sich die zwei Zellenräder (34,35) im bestimmungsgemäßen Betrieb des Streuwerks (1) in gegenläufigen Drehrichtungen (343,353) synchron zueinander abwälzen.

7. Streuwerk (1) nach einem der Ansprüche 1 bis 6, bei dem die Förderzellen (34,35) vollständig mit einem elastischen Material gebildet sind.

8. Streuwerk (1) nach einem der Ansprüche 1 bis 7, bei dem die Zellenräder (34,35) derart zueinander angeordnet sind, dass sich im bestimmungsgemäßen Betrieb des Streuwerks (1) eine Trennwand (344,354) einer Förderzelle (341,351) des einen Zellenrades bei deren Durchlauf zwischen den zwei Zellenrädern (34,35) an die Innenfläche der jeweils zugeordneten benachbarten Förderzelle (341,351) des anderen Zellenrades anlegt oder andrückt, in die die Trennwand (344,354) eingreift.

9. Streuwerk (1) nach Anspruch 8, bei dem der Abstand zwischen den Drehachsen (340,350) der zwei Zellenräder (34,35) so eingerichtet ist, dass jede Trennwand (344,354) bei deren Durchlauf zwischen den zwei Zellenrädern (34,35) derart auf die Innenfläche der zugeordneten Förderzelle (341,351) des anderen Zellenrades (34,35) drückt, dass sich die Trennwand (344,354) und/oder die Innenfläche der zugeordneten Förderzelle (341,351) verformt.

10. Streuwerk (1) nach Anspruch 8 oder 9, bei dem sich die Trennwände (344,354) jeweils mit ihrem äußeren Endbereich (346,356) an die Innenfläche (345,355) der jeweils zugeordneten benachbarten Förderzelle (341,351) des anderen Zellenrades (34,35) anlegen oder andrücken.

11. Streuwerk (1) nach einem der Ansprüche 1 bis 10, bei dem der Abstand zwischen den Drehachsen (340,350) der zwei Zellenräder (34,35) geringer ist als die Summe aus dem äußeren Radius (Rₐ) und dem inneren Radius (Rᵢ) der Zellenräder (34,35).

12. Streuwerk (1) nach einem der Ansprüche 1 bis 11, bei dem die zwei Zellenräder (34,35) hinsichtlich ihres Umfangs und Anzahl und Größe ihrer Förderzellen (341,351) identisch ausgestaltet sind.

13. Streuwerk (1) nach Anspruch 12 unter unmittelbarem oder mittelbarem Rückbezug auf Anspruch 6, bei dem die zwei Zahnräder (342,352) identisch sind.

14. Streuwerk (1) nach einem der Ansprüche 1 bis 13, das eine Mehrzahl der Zellenradschleusen (3) aufweist, die in Fahrrichtung (53) des Streugeräts (5) gesehen nebeneinander angeordnet sind und die im bestimmungsgemäßen Betrieb des Streuwerks (1) unabhängig voneinander betreibbar sind.

15. Streugerät (5) mit einem Streugutbehälter (51), der einen Streugutauslass (52) aufweist, dem ein Streuwerk (1) gemäß einem der Ansprüche 1 bis 14 nachgeordnet ist.
